# EUROPEAN PATENT SPECIFICATION

(11) **EP 4 392 199 B1**
(45) Date of publication and mention of the grant of the patent: **10.09.2025**
(21) Application number: 22757632.9
(22) Date of filing: 05.08.2022
(51) Int. Cl.: B23K 26/00, B23K 26/0622, B23K 26/352, B23K 26/362, B23K 103/00

(54) **METHOD AND APPARATUS FOR MODIFYING A SUBSTRATE**
VERFAHREN UND VORRICHTUNG ZUR MODIFIZIERUNG EINES SUBSTRATS
PROCÉDÉ ET APPAREIL POUR MODIFIER UN SUBSTRAT

(30) Priority: 24.08.2021 GB 202112125
(43) Date of publication of application: 03.07.2024
(73) Proprietor: INTEL Corporation, Santa Clara, CA 95054-1549 (US)
(72) Inventor: PSAILA, Nicholas D., Livingston EH54 7EJ (GB); LAMING, Richard, Livingston EH54 7EJ (GB)
(74) Representative: 2SPL Patentanwälte PartG mbB
(86) International application number: PCT/GB2022/052060
(87) International publication number: WO 2023/026021

(56) References cited:
- JP-A- H03 190 135
- US-A- 5 232 674
- US-A- 6 010 497

## Description

The present invention relates to a method and apparatus for modifying a substrate using a pulsed laser beam, see claims 1 and 11, and, in particular though not exclusively, for use in forming an optical device.

### BACKGROUND

It is known to use a laser processing method to modify a substrate or a body comprising a material such as fused silica by irradiating the substrate with a pulsed laser beam. The pulsed laser beam may be used to irradiate one or more localised regions or volumes of the substrate to thereby modify the one or more irradiated regions or volumes. For example, it is known to irradiate a region of a substrate with a pulsed laser beam so as to modify a refractive index of the material of the substrate in the irradiated region. It is also known to irradiate a region of a substrate with a pulsed laser beam so as to modify a chemical etchability of the material of the substrate in the irradiated region. This may enable 3D micromachining of the substrate using a chemical etching step which follows irradiation of the substrate with the pulsed laser beam. It is also known to irradiate a region of a substrate with a pulsed laser beam so as to ablate at least some of the material of the substrate in the irradiated region.

For some applications, it is known to irradiate a plurality of regions of a substrate so as to modify the material of the substrate according to a desired spatial profile by moving the pulsed laser beam and the substrate relative to one another. To modify the material of the substrate according to a desired spatial profile whilst avoiding damaging the substrate unduly requires that the characteristics of the pulsed laser beam and the relative movement between the pulsed laser beam and the substrate are controlled carefully for compliance with a set of laser processing conditions or rules i.e. so that the characteristics of the pulsed laser beam and the relative movement between the pulsed laser beam and the substrate fall within a predetermined laser processing conditions window.

However, for a given predetermined laser processing conditions window, the throughput of such known laser processing methods for modifying a plurality of regions of a substrate may be limited.

### SUMMARY

According to a first aspect of the present invention, there is provided a method of modifying a substrate as defined in claim 1, the method comprising:
generating a pulsed laser beam comprising a train of laser pulses, the train of laser pulses including at least three consecutive laser pulses; and
controlling a direction of the pulsed laser beam and/or a position of the substrate from laser pulse to laser pulse so that the at least three consecutive laser pulses sequentially irradiate at least three regions of the substrate according to a predetermined spatial sequence which defines the relative spatial positions of the at least three regions of the substrate and the order of irradiation of the at least three regions of the substrate.

Further preferred embodiments of the first aspect of the present invention are defined in the dependent claims 2-10.

Optionally, the at least three regions of the substrate are different, distinct and/or non-overlapping regions of the substrate.

Such a method may enable the substrate to be modified according to a desired spatial profile at higher laser pulse repetition rates than prior art methods without unduly damaging the substrate. Such a method may allow the substrate to be modified more rapidly than prior art methods thereby achieving a higher laser processing throughput.

The method may comprise irradiating the substrate with the pulsed laser beam to modify a refractive index of a material of the substrate.

The method may comprise irradiating the substrate with the pulsed laser beam to modify a chemical etchability of the material of the substrate. The method may comprise exposing the substrate to a chemical etchant after irradiation of the substrate with the pulsed laser beam.

The method may comprise irradiating the substrate with the pulsed laser beam to ablate the material of the substrate.

The method may comprise controlling one or more characteristics of the pulsed laser beam.

The method may comprise controlling one or more of an energy of each pulse within the pulsed laser beam, a repetition rate of the pulsed laser beam, a pulse duration, a wavelength of the pulsed laser beam, a polarisation of the pulsed laser beam.

The pulsed laser beam may comprise visible light or non-visible light. For example, the pulsed laser beam may comprise one or more of infra-red light, visible light, or ultraviolet light.

The pulsed laser beam may have a wavelength which is greater than 400 nm.

For example, the pulsed laser beam may have a wavelength which is substantially equal to 520 nm, 800 nm, 1035 nm or 1550 nm.

The substrate may comprise a material such as a dielectric material that is at least partially transparent to the pulsed laser beam. For example, the substrate may comprise a glass or glass ceramic material such as fused silica, silicates, borosilicates, aluminosilicates, doped or modified silicates, phosphate glasses, doped or modified phosphates, chalcogenide glasses, doped or modified chalcogenides. The substrate may comprise a material other than a glass. The substrate may comprise a crystalline material such as quartz, lithium niobate, yttrium aluminium garnet or a doped, poled, or modified crystal such as periodically poled lithium niobate or neodymium doped yttrium aluminium garnet, a laser or amplifier gain medium such as a rare earth doped glass or crystal.

Optionally, controlling the direction of the pulsed laser beam and/or the position of the substrate from laser pulse to laser pulse so that the at least three consecutive laser pulses sequentially irradiate at least three regions of the substrate according to the predetermined spatial sequence comprises synchronising a movement of the pulsed laser beam and/or of the substrate with the timing of the at least three consecutive laser pulses so that the at least three regions of the substrate are sequentially irradiated with the at least three consecutive laser pulses according to the predetermined spatial sequence. This may enable the positions of the at least three irradiated regions of the substrate to be more accurately controlled.

Optionally, controlling the direction of the pulsed laser beam and/or the position of the substrate from laser pulse to laser pulse so that the at least three consecutive laser pulses sequentially irradiate at least three regions of the substrate according to the predetermined spatial sequence comprises:
controlling movement of the pulsed laser beam and/or of the substrate so as to move a nominal writing position of the pulsed laser beam to a first position in the substrate so that a first one of the at least three consecutive laser pulses irradiates a first region of the substrate centred on the first position;
controlling movement of the pulsed laser beam and/or of the substrate so as to move the nominal writing position of the pulsed laser beam across the substrate along a first direction from the first position in the substrate to a second position in the substrate so that a second one of the at least three consecutive laser pulses irradiates a second region of the substrate centred on the second position; and
controlling movement of the pulsed laser beam and/or of the substrate so as to move the nominal writing position of the pulsed laser beam across the substrate along a second direction from the second position in the substrate to a third position in the substrate so that a third one of the at least three consecutive laser pulses irradiates a third region of the substrate centred on the third position,
wherein the first and second directions are different.

Optionally, the first, second and third regions of the substrate are different, distinct and/or non-overlapping regions of the substrate.

Optionally, the first, second and third positions in the substrate are different positions in the substrate.

Optionally, wherein the third region of the substrate is located closer to the first region than the second region.

Optionally, wherein the third region of the substrate is located between the first and second regions of the substrate.

Optionally, the method comprises irradiating any two nearest-neighbour regions of the substrate using laser pulses which are separated by a time period which is greater than or equal to a predetermined minimum time period.

The minimum time period may be chosen for compliance of the method with a predetermined laser processing conditions window.

The predetermined minimum time period may be chosen so that the temperatures of said any two nearest-neighbour regions of the substrate are less than or equal to a predetermined threshold temperature.

The characteristics of the laser pulses of the pulsed laser beam may be selected so that that irradiation of a region of the substrate with a laser pulse results in multi-photon absorption of the laser pulse in the material of the substrate in the irradiated region and heating of the material of the substrate in the irradiated region. The resulting heat energy, which is generated in the irradiated region, diffuses from the irradiated region through the substrate such that the irradiated region cools over time. Accordingly, choosing the predetermined minimum time period so that the temperatures of said any two nearest-neighbour regions of the substrate are less than or equal to a predetermined threshold temperature may ensure that the method complies with the predetermined laser processing conditions window thereby enabling the substrate to be modified according to a desired spatial profile at a higher laser pulse repetition rate than prior art methods without unduly damaging the substrate.

Optionally, the method comprises irradiating any two regions of the substrate with consecutive laser pulses, wherein said any two regions of the substrate are separated by a distance which is greater than or equal to a predetermined minimum spatial separation.

The minimum spatial separation may be chosen for compliance of the method with a predetermined laser processing conditions window.

The predetermined minimum spatial separation may be chosen so that the temperatures of said any two regions of the substrate are less than or equal to a predetermined threshold temperature.

The characteristics of the laser pulses of the pulsed laser beam may be selected so that that irradiation of a region of the substrate with a laser pulse results in multi-photon absorption of the laser pulse in the material of the substrate in the irradiated region and heating of the material of the substrate in the irradiated region. The resulting heat energy, which is generated in the irradiated region, diffuses from the irradiated region through the substrate such that the irradiated region cools over time. Accordingly, choosing the predetermined minimum spatial separation so that the temperatures of said any two regions of the substrate exceed a predetermined threshold temperature may ensure that the method complies with the predetermined laser processing conditions window thereby enabling the substrate to be modified according to a desired spatial profile at a higher laser pulse repetition rate than prior art methods without unduly damaging the substrate.

The at least three regions of the substrate may be arranged in an array such as a 1D array, a 2D array, or a 3D array.

Compared to irradiating a 1D array of regions of the substrate, irradiating a 2D array of regions of the substrate may provide an additional degree of freedom to select the sequence in which the regions of the substrate are irradiated. For example, compared to irradiating a 1D array of regions of the substrate, irradiating a 2D array of regions of the substrate may enable the use of even higher laser pulse repetition rates whilst still operating within the laser processing conditions window because consecutive laser pulses may be used to irradiate regions of the substrate which are separated by a greater distance and/or because nearest-neighbour regions of the substrate may be irradiated with non-consecutive laser pulses which are separated by a longer time period.

Compared to irradiating a 2D array of regions of the substrate, irradiating a 3D array of regions of the substrate may provide an additional degree of freedom to select the sequence in which the regions of the substrate are irradiated. For example, compared to irradiating a 2D array of regions of the substrate, irradiating a 3D array of regions of the substrate may enable the use of even higher laser pulse repetition rates whilst still operating within the laser processing conditions window because consecutive laser pulses may be used to irradiate regions of the substrate which are separated by a greater distance and/or because nearest-neighbour regions of the substrate may be irradiated with non-consecutive laser pulses which are separated by a longer time period.

The plurality of regions of the substrate may be arranged in a uniform array such as a uniform 1D array, a uniform 2D array, or a uniform 3D array.

The method may comprise irradiating the at least three regions of the substrate with the pulsed laser beam so as to modify the substrate according to a desired spatial profile.

The method may comprise irradiating the substrate with the pulsed laser beam so as to create or define one or more features or structures in the substrate. Each feature or structure may be configured to transmit, reflect, refract and/or diffract light. Each features or structure may comprise an optical device. Each features or structure may be configured to guide light. Each feature or structure may be configured to locate and/or align a separately formed optical component relative to the substrate. Each feature or structure may be configured to locate and/or align a separately formed optical waveguide or optical fibre relative to the substrate.

Optionally, the method comprises irradiating one or more of the regions of the at least three regions of the substrate with a corresponding single one of the laser pulses of the train of laser pulses.

Optionally, the method comprises irradiating one or more of the regions of the at least three regions of the substrate with a corresponding plurality of non-consecutive laser pulses of the train of laser pulses. Such a method may allow different regions of the at least three regions of the substrate to receive a different total dose of irradiation whilst still complying with the laser processing conditions window. This may be useful for varying the degree of modification between different regions of the substrate, for example for varying a refractive index modification between different regions of the substrate according to a desired refractive index profile.

Optionally, controlling the direction of the pulsed laser beam and/or the position of the substrate from laser pulse to laser pulse comprises controlling movement of the pulsed laser beam relative to the substrate from laser pulse to laser pulse, for example by steering the pulsed laser beam relative to the substrate from laser pulse to laser pulse.

Optionally, controlling the direction of the pulsed laser beam and/or the position of the substrate from laser pulse to laser pulse comprises controlling movement of the substrate relative to the pulsed laser beam. For example, the method may comprise controlling movement of the substrate relative to the pulsed laser beam in a direction parallel to a surface of the substrate. The method may comprise controlling movement of the substrate relative to the pulsed laser beam in a direction orthogonal to a surface of the substrate. The method may comprise controlling movement of the substrate in a direction of propagation of the pulsed laser beam. The method may comprise controlling movement of the substrate in a direction which is opposite to a direction of propagation of the pulsed laser beam. Such a method may allow the substrate to be modified in 3D.

According to the present invention, controlling the direction of the pulsed laser beam and/or the position of the substrate from laser pulse to laser pulse comprises controlling movement of the pulsed laser beam and/or the substrate so as to move the nominal writing position of the pulsed laser beam across the substrate with a velocity which varies during a time period over which the at least three consecutive laser pulses irradiate the at least three regions of the substrate.

Further according to the present invention, the velocity includes first and second velocity components, wherein the first velocity component is constant and the second velocity component is variable, or wherein the first velocity component varies more slowly than the second velocity component.

Optionally, the first velocity component is unidirectional.

Optionally, the second velocity component varies in magnitude and/or in direction.

Optionally, the first velocity component is associated with movement of the substrate relative to the pulsed laser beam.

Optionally, the second velocity component is associated with movement of the pulsed laser beam relative to the substrate, for example wherein the second velocity component is associated with beam steering of the pulsed laser beam relative to the substrate.

The method may comprise using a beam scanner to control the direction of the pulsed laser beam from laser pulse to laser pulse so that the at least three consecutive laser pulses sequentially irradiate at least three regions of the substrate according to a predetermined spatial sequence which defines the relative spatial positions of the at least three regions of the substrate and the order of irradiation of the at least three regions of the substrate.

The method may comprise using a further beam scanner to impose an additional relative motion between the pulsed laser beam and the substrate onto the relative motion between the pulsed laser beam and the substrate provided by the beam scanner.

The beam scanner may have a response time that is faster than a response time of the further beam scanner.

The response time may refer to a time between the beam scanner (or further beam scanner) receiving an input signal that specifies a new configuration or state for the beam scanner (or further beam scanner) and the beam scanner (or further beam scanner) changing its configuration or state to match the new configuration or state.

The beam scanner may be configured to move, for example steer, the pulsed laser beam faster than the further beam scanner.

The further beam scanner may provide a greater associated range of movement of the pulsed laser beam than a range of movement of the pulsed laser beam that is associated with the beam scanner. The further beam scanner may be operable to steer the pulsed laser beam over a larger angular range than the beam scanner.

Using the beam scanner and the further beam scanner in combination in this way may enable the pulsed laser beam to be moved relative to the substrate over greater distances than using the beam scanner alone whilst also enabling irradiation of the at least three regions of the substrate according to a desired spatial profile at a higher laser pulse repetition rate than prior art methods without unduly damaging the substrate.

The beam scanner may comprise a non-mechanical beam scanner. The beam scanner may comprise a solid state beam scanner. The beam scanner may comprise an acousto-optic modulator beam scanner. The beam scanner may comprise an electro-optic modulator beam scanner.

The further beam scanner may comprise a mechanical beam scanner. The further beam scanner may include one or more moving parts. The further beam scanner may comprise a galvanometer beam scanner. The further beam scanner may comprise a tilting mirror beam scanner.

The method may comprise moving the substrate relative to the pulsed laser beam using a moveable stage such as a motion control stage or a translation stage to which the substrate is fixed. Using a moveable stage may enable larger areas of the substrate to be irradiated by the pulsed laser beam than would be possible by moving the pulsed laser beam relative to the substrate using the beam scanner and/or the further beam scanner.

The method may comprise moving the substrate relative to the pulsed laser beam whilst moving the pulsed laser beam relative to the substrate.

The method may comprise using the moveable stage to move the substrate relative to the pulsed laser beam whilst using the beam scanner and, optionally also the further beam scanner, to move the pulsed laser beam relative to the substrate.

The method may comprise generating a synchronisation control or trigger signal and using the synchronisation control or trigger signal to synchronise the relative movement between the substrate and the pulsed laser beam with the timing of the laser pulses of the train of laser pulses.

The method may comprise using a photodetector such as a high speed photodetector to detect a portion of the pulsed laser beam to thereby generate the synchronisation control signal.

The method may comprise using a pulse picker to control the timing of the laser pulses of the train of laser pulses according to the synchronisation control signal to synchronise the relative movement between the substrate and the pulsed laser beam with the timing of the laser pulses of the train of laser pulses.

The method may comprise using the synchronisation control signal to trigger or initiate the emission of each laser pulse of the train of laser pulses from a pulsed laser and using the synchronisation control signal to synchronise the relative movement between the substrate and the pulsed laser beam with the timing of the laser pulses of the train of laser pulses.

The method may comprise using the synchronisation control signal to trigger the generation of a predetermined waveform for controlling the sequence of irradiation of the at least three regions of the substrate with the pulsed laser beam. This may enable the positions of the irradiated regions of the substrate to be controlled more accurately.

The method may comprise using the synchronisation control signal to trigger an Arbitrary Waveform Generator to generate the predetermined waveform for controlling the sequence of irradiation of the at least three regions of the substrate with the pulsed laser beam.

The method may comprise determining or measuring emission timing data for one or more of the laser pulses. For example, the method may comprise detecting a portion of the pulsed laser beam to thereby measure the emission timing data for one or more of the laser pulses emitted from the pulsed laser.

The method may comprise determining or measuring a nominal writing position of the pulsed laser beam in the substrate. The method may comprise determining or measuring a velocity of the nominal writing position of the pulsed laser beam across the substrate. The method may comprise calculating a predicted nominal writing position of the pulsed laser beam in the substrate at a time of emission of a future laser pulse on the substrate using the measured emission timing data and at least one of the determined or measured nominal writing position of the pulsed laser beam in the substrate and the determined or measured velocity of the nominal writing position of the pulsed laser beam in the substrate. The method may comprise compensating for any difference between the predicted nominal writing position of the pulsed laser beam in the substrate and a corresponding desired nominal writing position of the pulsed laser beam in the substrate. For example, the method may comprise controlling a beam steering configuration of a beam scanner and/or a rate of change of the beam steering configuration of the beam scanner, to compensate for any difference between the predicted nominal writing position of the pulsed laser beam in the substrate and the desired nominal writing position of the pulsed laser beam in the substrate.

The method may comprise adjusting the timing of emission of a future laser pulse to compensate for any difference between the predicted nominal writing position of the pulsed laser beam in the substrate and the desired nominal writing position of the pulsed laser beam in the substrate.

Compensating for any difference between the predicted nominal writing position of the pulsed laser beam in the substrate and the desired nominal writing position of the pulsed laser beam in the substrate in this way may enable the plurality of regions of the substrate to be irradiated with a greater positional accuracy. This may improve the positional accuracy of any features created by modifying the substrate. This may minimise any unwanted spatial variation in the resulting modification of the substrate. For example, this may minimise any unwanted variation in the refractive index of the substrate. This may minimise any unwanted variation in the etchability of the substrate. This may minimise any unwanted surface roughness of the substrate following subsequent chemical etching of the substrate and/or where the substrate is modified by ablation of the material of the substrate.

The method may comprise determining or measuring a beam steering configuration such as one or more tilt angles of a slower beam scanner. The method may comprise using one or more sensors such as one or more rotary encoders to measure the beam steering configuration of the slower beam scanner. The method may comprise determining or measuring a rate of change of a beam steering configuration such as a rate of change of one or more tilt angles of the slower beam scanner. The method may comprise using one or more sensors such as one or more rotary encoders to measure the rate of change of the beam steering configuration of the slower beam scanner. The method may comprise calculating a predicted beam steering configuration of the slower beam scanner at a time of emission of a future laser pulse using the determined or measured emission timing data and at least one of the determined or measured beam steering configuration of the slower beam scanner and the determined or measured rate of change of the beam steering configuration of the slower beam scanner. The method may comprise using a faster beam scanner to compensate for any difference between the predicted beam steering configuration of the slower beam scanner and a desired beam steering configuration of the slower beam scanner at the time of emission of the future laser pulse. For example, the method may comprise controlling a beam steering configuration of the faster beam scanner and/or a rate of change of the beam steering configuration of the faster beam scanner to compensate for any difference between the predicted beam steering configuration of the slower beam scanner at the time of emission of the future laser pulse and a desired beam steering configuration of the slower beam scanner at the time of emission of the future laser pulse.

Using the faster beam scanner in this way to compensate for any difference between the beam steering configuration of the slower beam scanner and the desired beam steering configuration of the slower beam scanner at the time of emission of the future laser pulse may enable each of the regions of the substrate to be irradiated with a greater positional accuracy. This may improve the positional accuracy of any features created by modifying the substrate. This may minimise any unwanted spatial variation in the resulting modification of the substrate. For example, this may minimise any unwanted variation in the refractive index of the substrate. This may minimise any unwanted variation in the etchability of the substrate. This may minimise any unwanted surface roughness of the substrate following subsequent chemical etching of the substrate and/or where the substrate is modified by ablation of the material of the substrate. When the speed of the slower beam scanner is increased, the differences between the measured beam steering configuration of the slower beam scanner and the desired future beam steering configuration of the slower beam scanner may increase. Accordingly, using the faster beam scanner in this way to compensate for any difference between the predicted beam steering configuration of the slower beam scanner and the desired future beam steering configuration of the slower beam scanner may mean that the slower beam scanner can be operated at higher speeds without unduly degrading the positional accuracy with which the pulsed laser beam can irradiate each of the regions of the substrate thereby increasing the overall laser processing throughput.

The train of laser pulses may be periodic.

The train of laser pulses may have a repetition rate of at least 100 KHz, of at least 1 MHz, of at least 2 MHz, of at least 5 MHz or of at least 10 MHz.

The train of laser pulses may be generated using a Q-switched laser or a mode-locked laser.

The train of laser pulses may be generated using a laser in combination with an optical modulator.

According to a second aspect of the present invention, there is provided a system for modifying a substrate as defined in claim 11.

Further preferred embodiments of the second aspect of the present invention are defined in the dependent claims 12-13.

Optionally, the at least three regions of the substrate are different, distinct and/or non-overlapping regions of the substrate.

The irradiation control arrangement may be configured to control the direction of the pulsed laser beam and/or the position of the substrate from laser pulse to laser pulse so that the at least three consecutive laser pulses sequentially irradiate at least three regions of the substrate according to the predetermined spatial sequence by synchronising a movement of the pulsed laser beam and/or of the substrate with the timing of the at least three consecutive laser pulses so that the at least three regions of the substrate are sequentially irradiated with the at least three consecutive laser pulses according to the predetermined spatial sequence.

The irradiation control arrangement may be configured to control the direction of the pulsed laser beam and/or the position of the substrate from laser pulse to laser pulse so that the at least three consecutive laser pulses sequentially irradiate at least three regions of the substrate according to the predetermined spatial sequence by:
controlling movement of the pulsed laser beam and/or of the substrate so as to move a nominal writing position of the pulsed laser beam to a first position in the substrate so that a first one of the at least three consecutive laser pulses irradiates a first region of the substrate centred on the first position;
controlling movement of the pulsed laser beam and/or of the substrate so as to move the nominal writing position of the pulsed laser beam across the substrate along a first direction from the first position in the substrate to a second position in the substrate so that a second one of the at least three consecutive laser pulses irradiates a second region of the substrate centred on the second position; and
controlling movement of the pulsed laser beam and/or of the substrate so as to move the nominal writing position of the pulsed laser beam across the substrate along a second direction from the second position in the substrate to a third position in the substrate so that a third one of the at least three consecutive laser pulses irradiates a third region of the substrate centred on the third position,
wherein the first and second directions are different.

Optionally, the first, second and third regions of the substrate are different, distinct and/or non-overlapping regions of the substrate.

Optionally, the first, second and third positions in the substrate are different positions in the substrate.

The third region of the substrate may be located closer to the first region than the second region.

The irradiation control arrangement may comprise a beam scanner for controlling a nominal writing position of the pulsed laser beam in the substrate. The beam scanner may comprise a non-mechanical beam scanner. The beam scanner may comprise a solid state beam scanner. The beam scanner may comprise an acousto-optic modulator beam scanner. The beam scanner may comprise an electro-optic modulator beam scanner.

The irradiation control arrangement may comprise a further beam scanner for controlling the nominal writing position of the pulsed laser beam in the substrate.

The further beam scanner may comprise a mechanical beam scanner. The further beam scanner may include one or more moving parts. The further beam scanner may comprise a galvanometer beam scanner. The further beam scanner may comprise a tilting mirror beam scanner.

The beam scanner may be configured to rotate a direction of the pulsed laser beam around one axis.

The beam scanner may be configured to rotate a direction of the pulsed laser beam around two non-parallel axes, for example two orthogonal axes.

The beam scanner may comprise a first beam scanner element for varying an angle of the pulsed laser beam around a corresponding first axis and a second beam scanner element for varying an angle of the pulsed laser beam around a corresponding second axis, wherein the first and second axes are non-parallel, for example orthogonal.

The beam scanner may comprise a first lens and a second lens. The first and second lenses may be arranged in a 4f configuration, wherein the first and second lenses are separated by a distance of 2f, the first beam scanner element is located in a back focal plane of the first lens, and the second beam scanner element is located in a front focal plane of the second lens. Alternatively, the beam scanner may comprise a half-pitch GRIN rod lens. The first beam scanner element may be located at a first end of the half-pitch GRIN rod lens and the second beam scanner element may be located at a second end of the half-pitch GRIN rod lens. Such a beam scanner comprising a half-pitch GRIN rod lens may serve to reduce a variation in the optical path length experienced by the pulsed laser beam as the direction of the pulsed laser beam is scanned by the first beam scanner element when compared with a beam scanner comprising first and second lenses in a 4f configuration. Such a beam scanner comprising a half-pitch GRIN rod lens may also have improved robustness and/or be easier to align optically when compared with a beam scanner comprising first and second lenses in a 4f configuration.

One or each of the first and second beam scanner elements may comprise a non-mechanical beam scanner element. One or each of the first and second beam scanner elements may comprise a solid state beam scanner element. One or each of the first and second beam scanner elements may comprise an acousto-optic modulator beam scanner element. One or each of the first and second beam scanner elements may comprise an electro-optic modulator beam scanner element.

The further beam scanner may be configured to rotate a direction of the pulsed laser beam around one axis.

The further beam scanner may be configured to rotate a direction of the pulsed laser beam around two non-parallel axes, for example two orthogonal axes.

The irradiation control arrangement may comprise a third lens and a fourth lens. The beam scanner, the third and fourth lenses, and the further beam scanner may be arranged in a 4f configuration, wherein the third and fourth lenses are separated by a distance of 2f, the beam scanner is located in a back focal plane of the third lens, and the further beam scanner is located in a front focal plane of the fourth lens.

The irradiation control arrangement may comprise a fifth lens, a sixth lens and a microscope objective. The further beam scanner, the fifth and sixth lenses, and the microscope objective may be arranged in a 4f configuration, wherein the fifth and sixth lenses are separated by a distance of 2f, the further beam scanner is located in a back focal plane of the fifth lens, and the microscope objective is located in a front focal plane of the sixth lens.

The irradiation control arrangement may comprise a moveable stage for moving the substrate relative to the pulsed laser beam. The moveable stage may comprise a motion control stage or a translation stage to which the substrate is fixed.

The system may be configured to generate a synchronisation control signal and to use the synchronisation control signal to synchronise relative movement between the substrate and the pulsed laser beam with the timing of the laser pulses of the train of laser pulses.

The system may comprise a detector such as a high speed photodetector for detecting a portion of the pulsed laser beam to thereby generate the synchronisation control signal.

The irradiation control arrangement may be configured to use the synchronisation control signal to generate a predetermined sequence for irradiating of the at least three regions of the substrate with the pulsed laser beam.

The irradiation control arrangement may comprise an Arbitrary Waveform Generator that is configured to use the synchronisation control signal to generate a predetermined waveform for controlling the sequence of irradiation of the at least three regions of the substrate with the pulsed laser beam.

### BRIEF DESCRIPTION OF THE DRAWINGS

These and other aspects of the present disclosure will now be described, by way of non-limiting example only, with reference to the accompanying drawings, wherein:
- **FIG. 1**: depicts a schematic diagram of a system for modifying a substrate;
- **FIG. 2**: depicts a flow chart detailing a method of modifying a substrate;
- **FIG. 3**: depicts first, second, third, and fourth pulse spatial sequences for use in modifying a substrate in 1D using the method of FIG. 2;
- **FIG. 4A**: depicts a graph showing a position of a region of the substrate irradiated by each laser pulse as a function of time for laser pulses according to the first pulse spatial sequence of FIG. 3;
- **FIG. 4B**: depicts a graph showing a contribution of a faster beam scanner to the graph of FIG. 4A isolated from a contribution of a slower further beam scanner;
- **FIG. 5A**: depicts a graph showing a position of a region of the substrate irradiated by each laser pulse as a function of time for laser pulses according to the second pulse spatial sequence of FIG. 3;
- **FIG. 5B**: depicts a graph showing a contribution of the faster beam scanner to the graph of FIG. 5A isolated from a contribution of the slower further beam scanner;
- **FIG. 6A**: depicts a graph showing a position of a region of the substrate irradiated by each laser pulse as a function of time for laser pulses according to the third pulse spatial sequence of FIG. 3;
- **FIG. 6B**: depicts a graph showing a contribution of the faster beam scanner to the graph of FIG. 6A isolated from a contribution of the slower further beam scanner;
- **FIG. 7A**: depicts a graph showing a position of a region of the substrate irradiated by each laser pulse as a function of time for laser pulses according to the fourth pulse spatial sequence of FIG. 3;
- **FIG. 7B**: depicts a graph showing a contribution of the faster beam scanner to the graph of FIG. 7A isolated from a contribution of the slower further beam scanner;
- **FIG. 8**: depicts a first pulse spatial sequence for use in modifying a substrate in 2D using the method of FIG. 2 showing a 2D position of a region of the substrate irradiated by each laser pulse;
- **FIG. 9**: depicts a second pulse spatial sequence for use in modifying a substrate in 2D using the method of FIG. 2 showing a 2D position of a region of the substrate irradiated by each laser pulse;
- **FIG. 10**: depicts a third pulse spatial sequence for use in modifying a substrate in 2D using the method of FIG. 2 showing a 2D position of a region of the substrate irradiated by each laser pulse;
- **FIG. 11**: depicts a fourth pulse spatial sequence for use in modifying a substrate in 2D using the method of FIG. 2 showing a 2D position of a region of the substrate irradiated by each laser pulse;
- **FIG. 12**: depicts a fifth pulse spatial sequence for use in modifying a substrate in 2D using the method of FIG. 2 showing a 2D position of a region of the substrate irradiated by each laser pulse; and
- **FIG. 13**: depicts a schematic diagram of an alternative two-axis beam scanner for use in the system of FIG. 1.

### DETAILED DESCRIPTION OF THE DRAWINGS

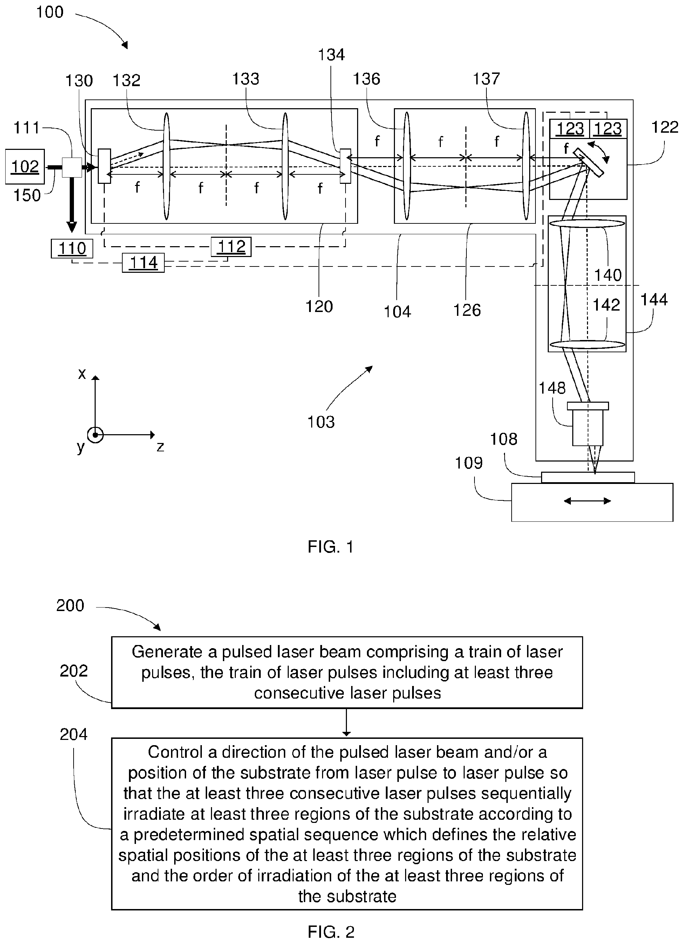

FIG. 1 depicts a schematic diagram of a system 100 for modifying a substrate 108. The system 100 includes a pulsed laser 102 and an irradiation control arrangement 103.

The pulsed laser 102 is a pulsed femtosecond laser for emitting a pulsed laser beam 150 in the form of a train of laser pulses with a wavelength in the region of 1035nm, a repetition rate in the range 100 KHz -10 MHz, and a pulse energy in the range of 100 to 2000 nJ.

The irradiation control arrangement 103 includes a beam steering arrangement 104 and a moveable stage 109. The substrate 108 is fixed to the moveable stage 109.

The beam steering arrangement 104 includes a two-axis beam scanner in the form of a two-axis acousto-optic modulator (AOM) beam scanner 120, an optical relay system 126, a further two-axis beam scanner in the form of a two-axis galvanometer beam scanner 122, a further optical relay system 144 and a microscope objective 148.

The two-axis AOM beam scanner 120 includes a first one-axis beam scanner element in the form of a first one-axis acousto-optic modulator (AOM) beam scanner element 130 and a second one-axis beam scanner element in the form of a second one-axis AOM beam scanner element 134. The beam scanner 120 further includes a first lens 132 and a second lens 133. The first beam scanner element 132, the first lens 132, the second lens 133, and the second beam scanner element 134 are arranged in a 4f configuration, wherein the first and second lenses 132, 133 are separated by a distance of 2f, the first beam scanner element 130 is located in a back focal plane of the first lens 132, and the second beam scanner element 134 is located in a front focal plane of the second lens 133.

To achieve 2D beam steering, the first and second beam scanner elements 130, 134 are arranged to be mutually orthogonal. Specifically, the first beam scanner element 130 is configured to control a direction of the pulsed laser beam 150 by rotating the pulsed laser beam 150 around the y axis and the second beam scanner element 134 is configured to control a direction of the pulsed laser beam 150 by rotating the pulsed laser beam 150 around the x axis.

The optical relay system 126 comprises a third lens 136 and a fourth lens 137. The second beam scanner element 134, the third lens 136, the fourth lens 137, and the further beam scanner 122 are arranged in a 4f configuration. Specifically, the third and fourth lenses 136, 137 are separated by a distance of 2f, the second beam scanner element 136 of the beam scanner 120 is located in a back focal plane of the third lens 136, and the galvanometer beam scanner 122 is located in a front focal plane of the fourth lens 137.

The further optical relay system 144 includes a fifth lens in the form of a scan lens 140 and a sixth lens in the form of a tube lens 142. The galvanometer beam scanner 122, the fifth lens 140, the sixth lens 142, and the microscope objective 148 are arranged in a 4f configuration, wherein the fifth and sixth lenses 140, 142 are separated by a distance of 2f, the galvanometer beam scanner 122 is located in a back focal plane of the fifth lens 140, and the microscope objective 148 is located in a front focal plane of the sixth lens 142.

The irradiation control arrangement 103 further includes a photodetector in the form of a high speed photodetector 110, a beamsplitter 111 for diverting a portion of the pulsed laser beam 150 to the high speed photodetector 110, and a signal generator in the form of an Arbitrary Waveform Generator (AWG) 112, and a controller 114. The galvanometer scanner 122 also includes one or more sensors in the form of one or more rotary encoders 123 for measuring a beam steering configuration of the galvanometer beam scanner 122.

As indicated by the dashed lines in FIG. 1, the controller 114 is configured for communication with the photodetector 110, the AWG 112, and the one or more rotary encoders 123 of the galvanometer beam scanner 122. Furthermore, the AWG 112 is connected electrically to the first and second beam scanner elements 130, 134 of the AOM beam scanner 120.

As will be described in more detail below, the Arbitrary Waveform Generator 112 is configured to generate a waveform or signal which is used to control the first and second beam scanner elements 130, 134 of the AOM beam scanner 120 so as to steer the pulsed laser beam 150 emitted by the pulsed laser 102 according to a beam-steering spatial sequence to thereby control a direction of the pulsed laser beam 150 from laser pulse to laser pulse so that at least three consecutive laser pulses sequentially irradiate at least three regions of the substrate 108 according to a predetermined spatial sequence which defines the relative spatial positions of the at least three regions of the substrate 108 and the order of irradiation of the at least three regions of the substrate 108.

In use, the system 100 modifies the substrate 108 according to a method 200 depicted in FIG. 2. The substrate 108 comprises at least three regions. The method 200 begins at step 202 with the pulsed laser 102 generating a pulsed laser beam 150 comprising a train of laser pulses including at least three consecutive laser pulses. The method 200 continues at step 204 with the irradiation control arrangement 103 controlling irradiation of the substrate 108 with the pulsed laser beam 150 so as to modify the substrate 108. Specifically, the irradiation control arrangement 103 controls a direction of the pulsed laser beam 150 and/or a position of the substrate from laser pulse to laser pulse so that at least three consecutive laser pulses sequentially irradiate at least three regions of the substrate 108 according to a predetermined spatial sequence which defines the relative spatial positions of the at least three regions of the substrate 108 and the order of irradiation of the at least three regions of the substrate 108.

In more detail, following emission from the laser 102, the pulsed laser beam 150 is received by the two-axis AOM beam scanner 120. The first beam scanner element 130 of the two-axis AOM beam scanner 120 controls a direction of the pulsed laser beam 150 in 1D by rotating the pulsed laser beam 150 around the y axis and the second beam scanner element 134 of the two-axis AOM beam scanner 120 controls a direction of the pulsed laser beam 150 in 1D by rotating the pulsed laser beam 150 around the x axis.

The optical relay system 126 couples the pulsed laser beam 150 from the second beam scanner element 134 of the two-axis AOM beam scanner 120 to the galvanometer beam scanner 122.

The galvanometer beam scanner 122 provides additional steering of the pulsed laser beam 150 in two dimensions (i.e. around both the x-axis and the y-axis).

The further optical relay system 144 couples the pulsed laser beam 150 to the microscope objective 148. The microscope objective 148 focuses the pulsed laser beam 150 onto the substrate.

Using the AOM beam scanner 120 and the galvanometer beam scanner 122, the irradiation control arrangement 103 moves the pulsed laser beam 150 relative to the substrate 108 by steering the pulsed laser beam 150 in two dimensions in a plane parallel to an upper surface of the substrate 108. Specifically, the AOM beam scanner 120 steers the pulsed laser beam 150 so as to irradiate the first region with the first laser pulse, irradiate the third region with the second laser pulse, and then irradiate the second region with the third laser pulse. The galvanometer beam scanner 122 imposes additional motion on the pulsed laser beam 150 relative to the substrate 108, wherein the additional motion is additional to the motion of the pulsed laser beam 150 relative to the substrate 108 that is imposed by the AOM beam scanner 120. For example, the galvanometer beam scanner 122 imposes an additional linear motion on the pulsed laser beam 150 relative to the substrate 108.

The AOM beam scanner 120 steers the pulsed laser beam 150 faster than the galvanometer beam scanner 122 and/or has a response time that is faster than a response time of the galvanometer beam scanner 122. Consequently, using the AOM beam scanner 120 and the galvanometer beam scanner 122 in combination enables the pulsed laser beam 150 to be steered faster than would be possible using the galvanometer beam scanner 122 alone and over a larger area of the substrate 108 than would be possible using the AOM beam scanner 120 alone. Furthermore, using the moveable stage 109 to move the substrate 108 relative to the pulsed laser beam 150 enables even larger areas of the substrate 108 to be irradiated.

The beamsplitter 111 diverts a portion of the pulsed laser beam 150 onto the photodetector 110 causing the photodetector 110 to generate a synchronisation control signal containing timing information of each pulse within the pulsed laser beam 150. The synchronisation control signal is transmitted electrically to the controller 114. The controller 114 uses the synchronisation control signal to trigger the AWG 112. When triggered by the synchronisation control signal, the AWG 112, generates waveforms which are used to control the first and second AOM beam scanner elements 130, 132 of the AOM beam scanner 120 so as to control the movement of the pulsed laser beam 150 relative to the substrate 108 according to a desired pulse spatial sequence.

Furthermore, the one or more rotary encoders 123 generate signals representative of a beam steering configuration of the galvanometer beam scanner 122 and/or a rate of change of a beam steering configuration of the galvanometer beam scanner 122. Specifically, the one or more rotary encoders 123 generate signals representative of one or more tilt angles of the mirrors of the galvanometer beam scanner 122 and/or a rate of change of one or more tilt angles of the mirrors of the galvanometer beam scanner 122. The signals representative of the beam steering configuration of the galvanometer beam scanner 122 and/or the rate of change of the beam steering configuration of the galvanometer beam scanner 122 are transmitted electrically from the one or more rotary encoders 123 to the controller 114. The controller 114 then uses the synchronisation control signal and the signals representative of the beam steering configuration of the galvanometer beam scanner 122 and/or the rate of change of the beam steering configuration of the galvanometer beam scanner 122 to predict a beam steering configuration of the galvanometer beam scanner 122 at a time of emission of a future laser pulse and the controller 114 controls the beam steering configuration and/or the rate of change of the beam steering configuration of the faster AOM beam scanner 120 so as to compensate for any difference between the predicted beam steering configuration of the galvanometer beam scanner 122 and a desired future beam steering configuration of the galvanometer beam scanner 122 at the time of emission of the future laser pulse.

Using the faster AOM beam scanner 120 in this way to compensate for any difference between the predicted beam steering configuration of the slower galvanometer beam scanner 122 and the desired future beam steering configuration of the slower galvanometer beam scanner 122 at the time of emission of the future laser pulse may enable each region of the substrate 108 to be irradiated with a greater positional accuracy. This may improve the positional accuracy of any features created by modifying the substrate 108. This may minimise any unwanted spatial variation in the resulting modification of the substrate 108. For example, this may minimise any unwanted variation in the refractive index of the substrate 108. This may minimise any unwanted variation in the etchability of the substrate 108. This may minimise any unwanted surface roughness of the substrate 108 following subsequent chemical etching of the substrate 108 and/or where the substrate 108 is modified by ablation of the material of the substrate 108. When the speed of the slower galvanometer beam scanner 122 is increased, the differences between the measured beam steering configuration of the slower galvanometer beam scanner 122 and the intended beam steering configuration of the slower galvanometer beam scanner 122 may increase. Accordingly, using the faster AOM beam scanner 120 in this way to compensate for any difference between the beam steering configuration of the slower galvanometer beam scanner 122 and the intended beam steering configuration of the slower galvanometer beam scanner 122 may also mean that the slower galvanometer beam scanner 122 can be operated at higher speeds without unduly degrading the positional accuracy with which the pulsed laser beam 150 can irradiate each of the regions of the substrate 108 thereby increasing the overall laser processing throughput.

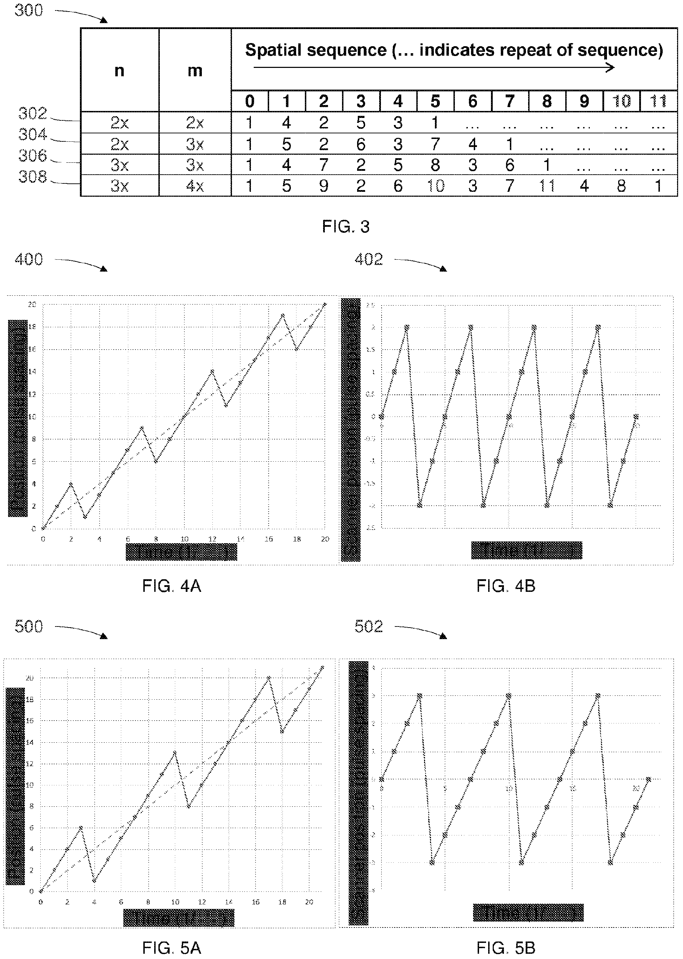

FIG. 3 lists examples 300 of a first linear pulse spatial sequence 302, a second linear pulse spatial sequence 304, a third linear pulse spatial sequence 306, and a fourth linear pulse spatial sequence 308. In FIG. 3, different regions of the substrate 108 are arranged in a 1D uniform array along a linear path and are labelled "0" to "11". Each of the linear pulse spatial sequences 302, 304, 306, 308 specifies the sequence or order in which each different region "0" to "11" of the substrate 108 is irradiated with a corresponding laser pulse.

As will be described in more detail below, each linear pulse spatial sequence 302, 304, 306, 308 involves "jumping" the pulsed laser beam 150 ahead along the linear path and then "jumping" the pulsed laser beam 150 back along the linear path, such that consecutive laser pulses irradiate non-adjacent regions of the substrate 108. Consequently, adjacent regions of the substrate 108 are irradiated with non-consecutive laser pulses.

Each linear pulse spatial sequence has a period defined as a number of laser pulses in the sequence before the sequence repeats. Furthermore, each linear pulse spatial sequence is characterized by two parameters. The first parameter is a minimum spatial jump *n* between consecutive pulses (in units of pulse spacing). The second parameter is a minimum temporal period *m* between adjacent irradiated regions of the substrate 108-in units of 1/RR, wherein RR is the repetition rate of the laser pulses in the pulsed laser beam 150. To increase *m* or *n,* the period of the linear spatial sequence must be increased.

For example, the first linear pulse spatial sequence 302 (*n* = 2, *m* = 2) has a period of 5 before the sequence repeats, the second linear pulse spatial sequence 304 (*n* = 2, *m* = 3) has a period of 7 before the sequence repeats, the third linear pulse spatial sequence 306 (*n* = 3, m = 3) has a period of 8 before the sequence repeats, the fourth linear pulse spatial sequence 308 (*n =* 3, m = 4) has a period of 11 before the sequence repeats.

FIG. 4A depicts a graph 400 showing a position of a region of the substrate 108 irradiated by each laser pulse as a function of time according to the first linear pulse spatial sequence 302. The graph 400 corresponds to using the irradiation control arrangement 103 to steer the pulsed laser beam 150 so as to irradiate different regions of the substrate 108 with different laser pulses along a linear path according to the first linear pulse spatial sequence 302. As a function of time, the positions of the irradiated regions follow a saw-tooth pattern that is attributable to the beam-steering of the faster AOM beam scanner 120 superimposed upon a positive linear ramp depicted by the dashed line, wherein the positive linear ramp is attributable to a constant beam-steering speed of the slower galvanometer beam scanner 122 e.g. to a linear rate of change of a beam-steering angle attributable to the operation of the slower galvanometer scanner 122.

More specifically, according to the first linear pulse spatial sequence 302, a first pulse in the sequence is incident on region 0, a second pulse in the sequence is incident on region 2 (i.e. jumping ahead past region 1), a third pulse in the sequence is incident on region 4 (i.e. jumping ahead past region 3), a fourth pulse in the sequence is incident on region 1 (i.e. jumping back to region 1), and a fifth pulse in the sequence is incident on region 3 (i.e. jumping ahead past region 2). After this, the sequence repeats. However, because the galvanometer beam scanner 122 imposes the constant rate of movement of the pulsed laser beam 150 relative to the substrate 108 depicted by the dashed line, the sixth pulse in the sequence (i.e. which is the first pulse of a new sequence), is incident on region 5 (i.e. instead of region 0 as would be the case without the constant rate of movement of the pulsed laser beam 150 relative to the substrate 108). Accordingly, the first linear pulse spatial sequence 302 defines the irradiation of different regions of the substrate 108, without consecutive laser pulses being used to irradiate regions of the substrate 108 that are adjacent to each other.

FIG. 4B depicts a graph 402 showing a contribution of the AOM beam scanner 120 to the graph 400 of FIG. 4A isolated from a contribution of the galvanometer beam scanner 122. Because the graph 402 does not include the contribution of the galvanometer beam scanner 122, the constant speed of movement of the pulsed laser beam 150 relative to the substrate 108, which is attributable to the operation of the slower galvanometer beam scanner 122, is not shown in FIG. 4B. Accordingly, the graph 402 depicts a periodic saw-tooth pattern, which repeats with every iteration of the sequence. As may be appreciated from FIG. 4B, the periodic saw-tooth pattern comprises a plurality of teeth, wherein each tooth includes a more gradual positively sloped portion defined by a plurality of positions having values which increase progressively with time followed by a steeper negatively sloped portion.

FIG. 5A depicts a graph 500 showing a position of a region of the substrate 108 irradiated by each laser pulse as a function of time for laser pulses according to the second linear pulse spatial sequence 304 of FIG. 3. FIG. 5B depicts a graph 502 showing a contribution of the AOM beam scanner 120 to the graph 500 of FIG. 5A isolated from a contribution of the galvanometer beam scanner 122.

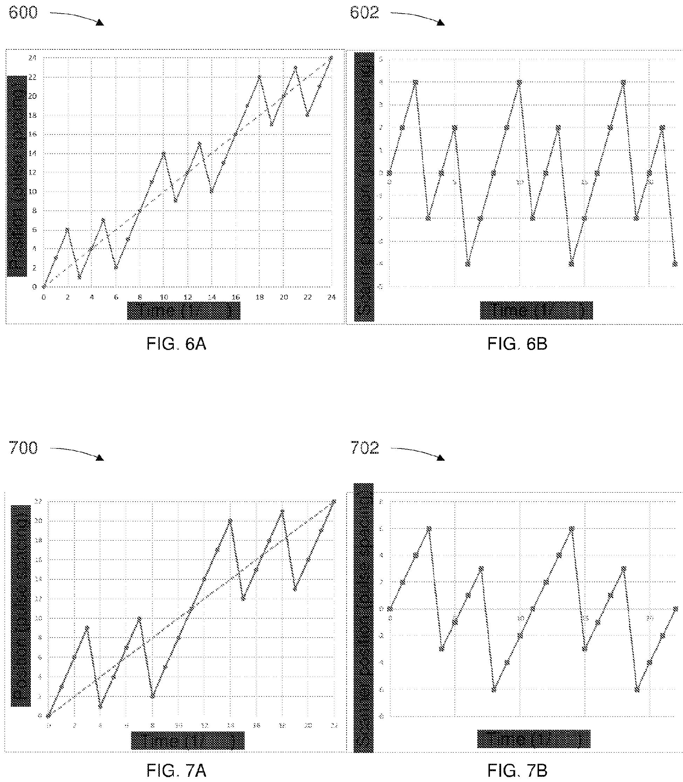

FIG. 6A depicts a graph 600 showing a position of a region of the substrate 108 irradiated by each laser pulse as a function of time for laser pulses according to the third linear pulse spatial sequence 306 of FIG. 3. FIG. 6B depicts a graph 602 showing a contribution of the AOM beam scanner 120 to the graph 600 of FIG. 6A isolated from a contribution of the galvanometer beam scanner 122.

FIG. 7A depicts a graph 700 showing a position of a region of the substrate 108 irradiated by each laser pulse as a function of time for laser pulses according to the fourth linear pulse spatial sequence 308 of FIG. 3. FIG. 7B depicts a graph 702 showing a contribution of the AOM beam scanner 120 to the graph 700 of FIG. 7A isolated from a contribution of the galvanometer beam scanner 122.

As may be appreciated from the foregoing description of FIGS. 4A - 7B, the linear pulse spatial sequences of FIG. 3 enable the use of an increased repetition rate of laser pulses and a corresponding increase in the speed of the additional scanning provided by the galvanometer beam scanner 122 along the linear path, without causing significant changes to the form of induced modification of the substrate 108. Consequently, the method 200 described above for modifying the substrate 108 increases the laser processing throughput of the substrate 108.

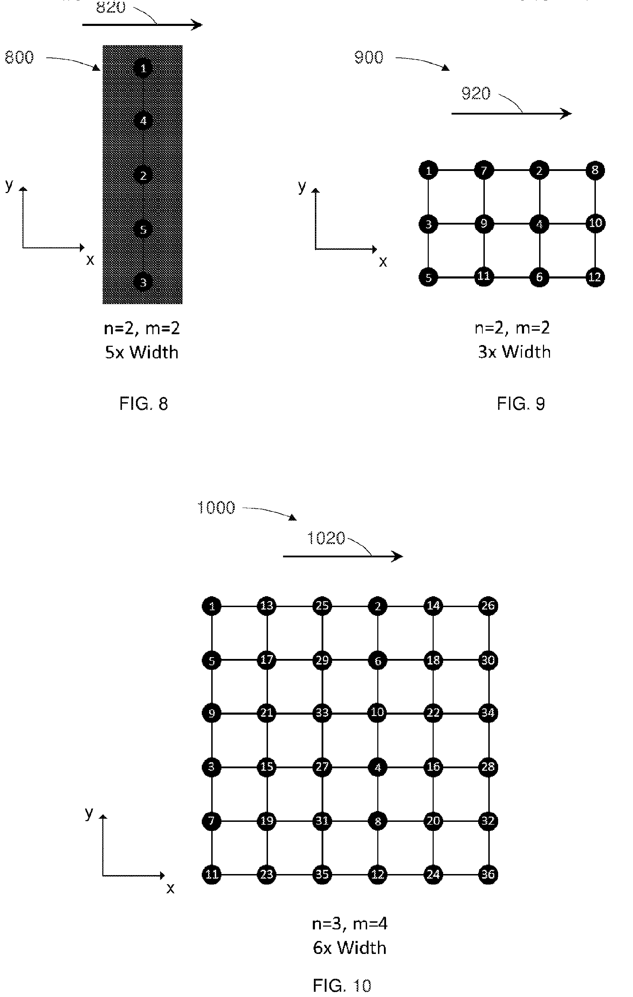

FIG. 8 depicts a first pulse spatial sequence 800 for use in the method 200 of FIG. 2 showing a 2D position of a region of the substrate irradiated by each laser pulse of a sequence of five laser pulses. Specifically, the first pulse spatial sequence 800 defines the order of irradiation of five distinct regions of the substrate 108 using the five laser pulses, wherein the five distinct regions are arranged along a y direction by using the AOM beam scanner 120 to steer the pulsed laser beam 150 in the y direction and the galvanometer beam scanner 122 to steer the pulsed laser beam 150 in the x direction as indicated by the arrow 820. The positions of the irradiated regions of the substrate 108 of the first pulse spatial sequence 800 are arranged in a uniform linear array with a width (i.e. along the y direction) of five times the spacing between the adjacent regions. For the first pulse spatial sequence 800, *n =* 2 and *m* = 2.

FIG. 9 depicts a second pulse spatial sequence 900 for use in the method 200 of FIG. 2 showing a 2D position of a region of the substrate 108 irradiated by each laser pulse of a sequence of 12 laser pulses. Specifically, the second pulse spatial sequence 900 defines the order of irradiation of 12 distinct regions of the substrate 108 using the 12 laser pulses, wherein the 12 distinct regions are arranged in 2D by using the AOM beam scanner 120 to steer the pulsed laser beam 150 in 2D and the galvanometer beam scanner 122 to steer the pulsed laser beam 150 in the x direction as indicated by the arrow 920. The second pulse spatial sequence 900 has a width (i.e. along the y direction) of 3 times the spacing between the adjacent regions. The second pulse spatial sequence 900 has a length (i.e. along the x direction) of 4 times the spacing between the adjacent regions. For the second pulse spatial sequence 900, *n =* 2 and *m* = 2.

FIG. 10 depicts a third pulse spatial sequence 1000 for use in the method 200 of FIG. 2 showing a 2D position of a region of the substrate 108 irradiated by each laser pulse of a sequence of 36 laser pulses. Specifically, the third pulse spatial sequence 1000 defines the order of irradiation of 36 distinct regions of the substrate 108 using the 36 laser pulses, wherein the 36 distinct regions are arranged in 2D by using the AOM beam scanner 120 to steer the pulsed laser beam 150 in 2D and the galvanometer beam scanner 122 to steer the pulsed laser beam 150 in the x direction as indicated by the arrow 1020. The third pulse spatial sequence 1000 has a width (i.e. along the y direction) of 6 times the spacing between the adjacent regions. The third pulse spatial sequence 1000 has a length (i.e. along the x direction) of 6 times the spacing between the adjacent regions. For the third pulse spatial sequence 1000, *n =* 3 and *m* = 4.

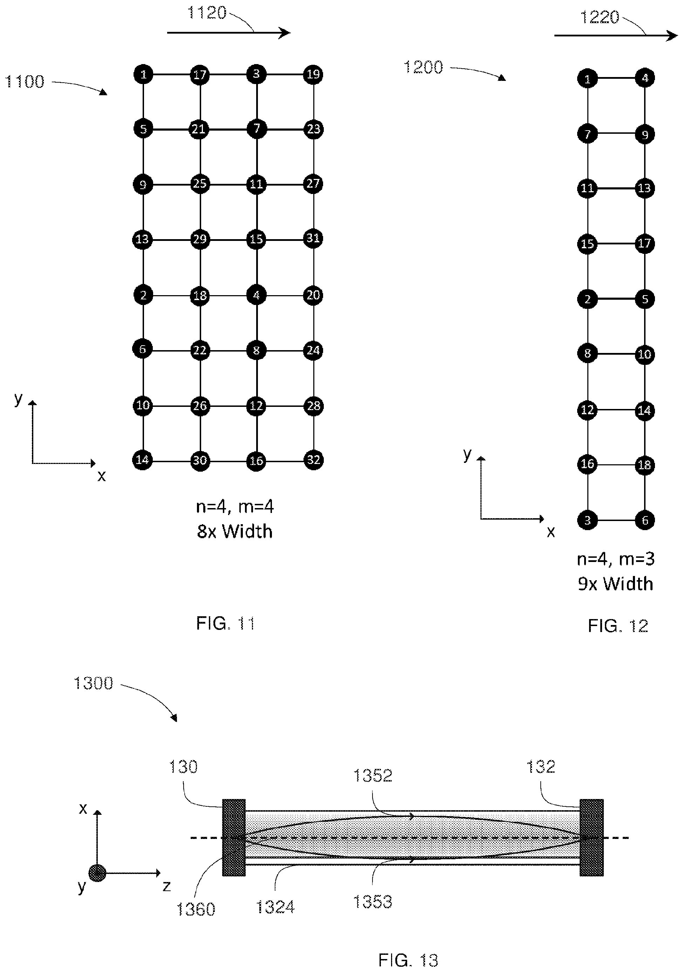

FIG. 11 depicts a fourth pulse spatial sequence 1100 for use in the method 200 of FIG. 2 showing a 2D position of a region of the substrate 108 irradiated by each laser pulse of a sequence of 32 laser pulses. Specifically, the fourth pulse spatial sequence 1100 defines the order of irradiation of 32 distinct regions of the substrate 108 using the 32 laser pulses, wherein the 32 distinct regions are arranged in 2D by using the AOM beam scanner 120 to steer the pulsed laser beam 150 in 2D and the galvanometer beam scanner 122 to steer the pulsed laser beam 150 in the x direction as indicated by the arrow 1120. The fourth pulse spatial sequence 1100 has a width (i.e. along the y direction) of 8 times the spacing between the adjacent regions. The fourth pulse spatial sequence 1100 has a length (i.e. along the x direction) of 4 times the spacing between the adjacent regions. For the fourth pulse spatial sequence 1100, *n* = 4 and *m* = 4.

FIG. 12 depicts a fifth pulse spatial sequence 1200 for use in the method 200 of FIG. 2 showing a 2D position of a region of the substrate 109 irradiated by each laser pulse of a sequence of 18 laser pulses. Specifically, the fifth pulse spatial sequence 1200 defines the order of irradiation of 18 distinct regions of the substrate 108 using the 18 laser pulses, wherein the 18 distinct regions are arranged in 2D by using the AOM beam scanner 120 to steer the pulsed laser beam 150 in 2D and the galvanometer beam scanner 122 to steer the pulsed laser beam 150 in the x direction as indicated by the arrow 1220. The fifth pulse spatial sequence 1200 has a width (i.e. along the y direction) of 9 times the spacing between the adjacent regions. The fifth pulse spatial sequence 1200 has a length (i.e. along the x direction) of 2 times the spacing between the adjacent regions. For the fifth pulse spatial sequence 1200, *n* = 4 and *m* = 3.

As may be appreciated from the description of the spatial sequences depicted in FIGS. 8 to 12, using the AOM beam scanner 120 and the galvanometer beam scanner 122 in combination to irradiate the substrate 108 according to the pulse spatial sequences 800, 900, 1000, 1100, 1200 results in a substrate laser processing speed that is higher than could be achieved using the galvanometer beam scanner 122 alone and may result in a higher laser processing throughput of the substrate 108 compared with prior art methods for laser processing a substrate.

Referring now to FIG. 13, there is shown a schematic diagram of an alternative two-axis AOM beam scanner 1300 for use in the system 100 of FIG. 1. The alternative two-axis beam scanner 1300 is identical to the two axis AOM beam scanner 120 described in relation to FIG. 1, except that the first and second lenses 132 ,133 have been replaced by a half-pitch graded index (GRIN) rod 1324. FIG. 13 depicts the first beam scanner element 130 receiving the pulsed laser beam 150 emitted by the pulsed laser 102 and deflecting (i.e. steering) the pulsed laser beam 150 into one of two deflected rays: an x+ ray 1352, and an x- ray 1353. The x+ ray 1352 has been deflected in the positive x direction by the first scanner element 130. The x- ray 1352 has been deflected in the negative x direction by the first scanner element 130. The x+ ray 1352 and the x- ray 1353 correspond to maximally displaced rays from an optical axis 1360 of the two-axis beam scanner 1300.

In use, the two-axis beam scanner 1300 steers the pulsed laser beam 150 along any direction between the x+ ray 1352 and the x- ray 1353. Unlike the lenses 132, 133 of the two-axis AOM beam scanner 120 described in relation to FIG. 1, the GRIN rod 1324 is a single optical element. Because the GRIN rod 1324 is one single optical element, the GRIN rod 1324 minimizes alignment complexity. The GRIN rod 1324 reduces pulse delay variations between different optical paths through the GRIN rod 1324, which is important for processing the substrate 108 using the ultrafast pulsed laser beam 150. For example, although a ray travelling along the optical axis 1360 has a shorter path than the x+ ray 1352, the ray travelling along the optical axis 1360 passes through area region of the GRIN rod 1324 having a higher refractive index than the region of the GRIN rod 1324 through which the x+ ray 1352 passes.

It should be understood that the different system and methods described above are illustrative only and that the claims are not limited to the system and methods described above. Those skilled in the art will understand that various modifications may be made to the system and methods described above without departing from the scope of the present invention as defined in the appended claims. For example, although the beam scanner 120 is described above as an AOM beam scanner, the beam scanner 120 may be a non-mechanical beam scanner or a solid state beam scanner of any kind. For example, the beam scanner 120 may be an electro-optic modulation (EOM) beam scanner.

The first beam scanner element 130 of the beam scanner 120 is described above as rotating the pulsed laser beam 150 around the y-axis and the second beam scanner element 134 of the scanner 120 is described as rotating the pulsed laser beam 150 around the x axis. However, in an alternative beam scanner, the first beam scanner element 130 may rotate the pulsed laser beam 150 around the x-axis and the second beam scanner element 134 may rotate the pulsed laser beam 150 around the y axis.

Although the further beam scanner 122 described above is a two-axis beam scanner, the further beam scanner 122 may be a one-axis beam scanner. Although the further beam scanner 122 described above is a galvanometer beam scanner, the further scanner 122 may be a tilted mirror beam scanner.

In each of the methods of modifying a substrate described with reference to FIGS. 4A to 7B, the contribution of the AOM beam scanner 120 to the positions of the different regions of the substrate 108 irradiated by the different laser pulses as a function of time is shown in FIGS. 4B, 5B, 6B and 7B and comprises a corresponding periodic saw-tooth pattern which includes a plurality of teeth, wherein each tooth includes a more gradual positively sloped portion defined by a plurality of positions having values which increase progressively with time followed by a steeper negatively sloped portion. In a variant of any of the methods of modifying a substrate described with reference to FIGS. 4A to 7B, the contribution of the AOM beam scanner 120 to the positions of the different regions of the substrate 108 irradiated by the different laser pulses as a function of time may comprise a corresponding periodic saw-tooth pattern which includes a plurality of teeth, wherein each tooth includes a more gradual negatively sloped portion defined by a plurality of positions having values which decrease progressively with time followed by a steeper positively sloped portion.

In addition to, or as an alternative to, using the faster AOM beam scanner 120 to compensate for any difference between the measured beam steering configuration of the slower galvanometer beam scanner 122 and the intended beam steering configuration of the slower galvanometer beam scanner 122, the timing of the emission of the laser pulses from the pulsed laser 102 may be controlled so as to compensate for any difference between the measured beam steering configuration of the slower galvanometer beam scanner 122 and the intended beam steering configuration of the slower galvanometer beam scanner 122.

The method may comprise moving the substrate 108 in a direction of propagation of the pulsed laser beam 150 and/or in a direction which is opposite to a direction of propagation of the pulsed laser beam 150, for example using the moveable stage 109. Such a method may allow the substrate 108 to be modified in 3D.

Although each region of the substrate 108 is described above as being irradiated by a single laser pulse, one or more of the regions of the substrate 108 may be irradiated by two or more non-consecutive laser pulses.

Although the beam steering arrangement 104 above is described above as including the photodetector 110, the AWG 112, and the controller 114, one or more of these components may be provided with the pulsed laser 102.

Although the pulsed laser 102 is described above as being a pulsed femtosecond laser for emitting a pulsed laser beam 150 in the form of a train of laser pulses with a wavelength in the region of 1035nm, the pulsed laser may be configured to emit a pulsed laser beam in the form of a train of laser pulses with a wavelength which is greater than 400 nm. For example, the pulsed laser may be configured to emit a pulsed laser beam in the form of a train of laser pulses with a wavelength which is substantially equal to 520 nm, 800 nm, or 1550 nm.

The train of laser pulses may be generated using a Q-switched laser or a mode-locked laser. The train of laser pulses may be generated using a laser in combination with an optical modulator.

## Claims

1. A method (200) of modifying a substrate, the method comprising:
generating (202) a pulsed laser beam comprising a train of laser pulses, the train of laser pulses including at least three consecutive laser pulses; and
controlling (204) a direction of the pulsed laser beam and/or
a position of a substrate from laser pulse to laser pulse to sequentially irradiate at least three regions of a substrate with the at least three consecutive laser pulses to modify the substrate according to a desired spatial profile, wherein the controlling is to sequentially irradiate the at least three regions of the substrate according to a predetermined spatial sequence which defines relative spatial positions of at least three regions of the substrate and defines an order of irradiation of the at least three regions of the substrate,
the method being **characterised by**:
controlling the direction of the pulsed laser beam and/or the position of the substrate from laser pulse to laser pulse comprises controlling movement of the pulsed laser beam and/or the substrate so as to move a nominal writing position of the pulsed laser beam across the substrate with a velocity which varies during a time period over which the at least three consecutive laser pulses irradiate the at least three regions of the substrate, wherein the velocity includes first and second velocity components, and wherein the first velocity component is constant and the second velocity component is variable, or wherein the first velocity component varies more slowly than the second velocity component.

2. The method (200) of claim 1, wherein controlling (204) the direction of the pulsed laser beam and/or the position of the substrate comprises synchronizing a movement of the pulsed laser beam and/or of the substrate with the timing of the at least three consecutive laser pulses so that the at least three regions of the substrate are sequentially irradiated with the at least three consecutive laser pulses according to the predetermined spatial sequence.

3. The method (200) of claim 1 or 2, wherein controlling (204) the direction of the pulsed laser beam or the position of the substrate comprises:
controlling movement of the pulsed laser beam or of the substrate so as to move a nominal writing position of the pulsed laser beam to a first position in the substrate so that a first one of the at least three consecutive laser pulses irradiates a first region of the substrate centered on the first position;
controlling movement of the pulsed laser beam or of the substrate so as to move the nominal writing position of the pulsed laser beam across the substrate along a first direction from the first position in the substrate to a second position in the substrate so that a second one of the at least three consecutive laser pulses irradiates a second region of the substrate centered on the second position; and
controlling movement of the pulsed laser beam or of the substrate so as to move the nominal writing position of the pulsed laser beam across the substrate along a second direction from the second position in the substrate to a third position in the substrate so that a third one of the at least three consecutive laser pulses irradiates a third region of the substrate centered on the third position, wherein the first and second directions are different.

4. The method (200) of any one of claims 1-3, comprising irradiating any two nearest-neighbor regions of the substrate using laser pulses which are separated by a time period which is greater than or equal to a predetermined minimum time period, wherein the predetermined minimum time period is chosen so that the temperatures of said any two nearest-neighbor regions of the substrate are less than or equal to a predetermined threshold temperature.

5. The method (200) of any one of claims 1-4, comprising irradiating any two regions of the substrate with consecutive laser pulses, wherein said any two regions of the substrate are separated by a distance which is greater than or equal to a predetermined minimum spatial separation, wherein the predetermined minimum spatial separation is chosen so that the temperatures of said any two regions of the substrate are less than or equal to a predetermined threshold temperature.

6. The method (200) of any one of claims 1-5, wherein the first velocity component is unidirectional and the second velocity component varies in magnitude and/or in direction.

7. The method (200) of any one of claims 1-5, wherein the first velocity component is associated with movement of the substrate relative to the pulsed laser beam.

8. The method (200) of any one of claims 1-7, comprising:
determining or measuring emission timing data for one or more of the laser pulses;
determining or measuring a nominal writing position of the pulsed laser beam in the substrate and/or determining or measuring a velocity of the nominal writing position of the pulsed laser beam across the substrate;
calculating a predicted nominal writing position of the pulsed laser beam in the substrate at a time of emission of a future laser pulse on the substrate using the determined or measured emission timing data and at least one of the determined or measured nominal writing position of the pulsed laser beam in the substrate and the determined or measured velocity of the nominal writing position of the pulsed laser beam across the substrate; and
compensating for any difference between the predicted nominal writing position of the pulsed laser beam in the substrate and a corresponding desired future nominal writing position of the pulsed laser beam in the substrate by controlling a beam steering configuration of a beam scanner and/or a rate of change of the beam steering configuration of the beam scanner, to compensate for any difference between the predicted nominal writing position of the pulsed laser beam in the substrate and the desired future nominal writing position of the pulsed laser beam in the substrate.

9. The method (200) of any one of claims 1-8, comprising:
determining or measuring emission timing data for one or more of the laser pulses;
determining or measuring a beam steering configuration such as one or more tilt angles of a slower beam scanner and/or determining or measuring a rate of change of a beam steering configuration such as a rate of change of the one or more tilt angles of the slower beam scanner;
calculating a predicted beam steering configuration of the slower beam scanner at a time of emission of a future laser pulse using the determined or measured emission timing data and at least one of the determined or measured beam steering configuration of the slower beam scanner and the determined or measured rate of change of the beam steering configuration of the slower beam scanner; and
using a faster beam scanner to compensate for any difference between the predicted beam steering configuration of the slower beam scanner and a corresponding desired beam steering configuration of the slower beam scanner at the time of emission of the future laser pulse, for example by controlling a beam steering configuration of the faster beam scanner and/or a rate of change of the beam steering configuration of the faster beam scanner to compensate for any difference between the predicted beam steering configuration of the slower beam scanner and a corresponding desired beam steering configuration of the slower beam scanner at the time of emission of the future laser pulse.

10. The method (200) of any one of claims 1-9, wherein the at least three regions of the substrate are arranged in an array such as a 1 D array, a 2D array, or a 3D array, for example a uniform 1 D array, a uniform 2D array, or a uniform 3D array.

11. A system (100) for modifying a substrate, the system comprising:
a pulsed laser (102) configured to generate a pulsed laser beam;
the system being **characterised by**:
a beamsplitter (111) configured to receive the pulsed laser beam; an irradiation control arrangement 103 including:
an arrangement (104) of optical elements configured to receive a first portion of the pulsed laser beam from the beamsplitter (111), the optical elements comprising:
a first two-axis beam scanner element (120);
a second two-axis beam scanner element (122) after the first two-axis beam scanner element (120); and
a microscope objective (148) after the second two-axis beam scanner element (122);
a stage (109) configured to house a substrate (108), the stage (109) positioned such that the substrate (108) coupled to the stage (109) receives the pulsed laser beam from the arrangement (104) of optical elements;
a photodetector (110) configured to receive a second portion of the pulsed laser beam; anc
control circuitry (114) configured to control :
the first two-axis beam scanner element (120) and the second two-axis beam scanner element (122) based on signals from the photodetector (110),
the direction of the pulsed laser beam and/or the position of the substrate (108) from laser pulse to laser pulse, with control of the movement of the pulsed laser beam and/or the substrate so as to move a nominal writing position of the pulsed laser beam across the substrate (108) with a velocity which varies during a time period over which the at least three consecutive laser pulses irradiate the at least three regions of the substrate (108), wherein the velocity includes first and second velocity components, and
wherein the first velocity component is constant and the second velocity component is variable,
or wherein the first velocity component varies more slowly than the second velocity component.

12. The system (100) of claim 11, wherein the control circuitry (114) is configured to control a direction of the pulsed laser beam from laser pulse to laser pulse so that at least three consecutive laser pulses sequentially irradiate at least three regions of the substrate (108) according to a predetermined spatial sequence which defines relative spatial positions, and an order of irradiation, of the at least three regions of the substrate (108).

13. The system (100) of claim 11 or 12, wherein the control circuitry (114) is further configured to control a position of the stage (109) from laser pulse to laser pulse so that at least three consecutive laser pulses sequentially irradiate at least three regions of the substrate (108) according to a predetermined spatial sequence which defines relative spatial positions, and an order of irradiation, of the at least three regions of the substrate (108).

## Patentansprüche

1. Verfahren (200) zum Modifizieren eines Substrats, wobei das Verfahren Folgendes umfasst:
Erzeugen (202) eines gepulsten Laserstrahls, der einen Zug von Laserpulsen umfasst, wobei der Zug von Laserpulsen wenigstens drei aufeinanderfolgende Laserpulse aufweist; und
Steuern (204) einer Richtung des gepulsten Laserstrahls und/oder einer Position eines Substrats von Laserpuls zu Laserpuls, um sequentiell wenigstens drei Gebiete eines Substrats mit den wenigstens drei aufeinanderfolgenden Laserpulsen zu bestrahlen, um das Substrat gemäß einem gewünschten räumlichen Profil zu modifizieren, wobei das Steuern zum sequentiellen Bestrahlen der wenigstens drei Gebiete des Substrats gemäß einer vorbestimmten räumlichen Sequenz ausgelegt ist, die relative räumliche Positionen von wenigstens drei Gebieten des Substrats definiert und eine Reihenfolge einer Bestrahlung der wenigstens drei Gebiete des Substrats definiert,
wobei das Verfahren **gekennzeichnet ist durch**:
das Steuern der Richtung des gepulsten Laserstrahls und/oder der Position des Substrats von Laserpuls zu Laserpuls umfasst Steuern einer Bewegung des gepulsten Laserstrahls und/oder des Substrats, so dass eine nominale Schreibposition des gepulsten Laserstrahls über das Substrat hinweg mit einer Geschwindigkeit bewegt wird, die während einer Zeitperiode variiert, über die die wenigstens drei aufeinanderfolgenden Laserpulse die wenigstens drei Gebiete des Substrats bestrahlen, wobei die Geschwindigkeit eine erste und zweite Geschwindigkeitskomponente aufweist, und wobei die erste Geschwindigkeitskomponente konstant ist und die zweite Geschwindigkeitskomponente variabel ist oder wobei die erste Geschwindigkeitskomponente langsamer als die zweite Geschwindigkeitskomponente variiert.

2. Verfahren (200) nach Anspruch 1, wobei das Steuern (204) der Richtung des gepulsten Laserstrahls und/oder der Position des Substrats Synchronisieren einer Bewegung des gepulsten Laserstrahls und/oder des Substrats mit dem Timing der wenigstens drei aufeinanderfolgenden Laserpulse umfasst, so dass die wenigstens drei Gebiete des Substrats sequentiell mit den wenigstens drei aufeinanderfolgenden Laserpulsen gemäß der vorbestimmte räumlichen Sequenz bestrahlt werden.

3. Verfahren (200) nach Anspruch 1 oder 2, wobei das Steuern (204) der Richtung des gepulsten Laserstrahls oder der Position des Substrats Folgendes umfasst:
Steuern einer Bewegung des gepulsten Laserstrahls oder des Substrats, so dass eine nominale Schreibposition des gepulsten Laserstrahls zu einer ersten Position in dem Substrat bewegt wird, so dass ein erster der wenigstens drei aufeinanderfolgenden Laserpulse ein erstes Gebiet des Substrats bestrahlt, das auf die erste Position zentriert ist;
Steuern einer Bewegung des gepulsten Laserstrahls oder des Substrats, so dass die nominale Schreibposition des gepulsten Laserstrahls über das Substrat hinweg entlang einer ersten Richtung von der ersten Position in dem Substrat zu einer zweiten Position in dem Substrat bewegt wird, so dass ein zweiter der wenigstens drei aufeinanderfolgenden Laserpulse ein zweites Gebiet des Substrats bestrahlt, das auf die zweite Position zentriert ist; und
Steuern einer Bewegung des gepulsten Laserstrahls oder des Substrats, so dass die nominale Schreibposition des gepulsten Laserstrahls über das Substrat hinweg entlang einer zweiten Richtung von der zweiten Position in dem Substrat zu einer dritten Position in dem Substrat bewegt wird, so dass ein dritter der wenigstens drei aufeinanderfolgenden Laserpulse ein drittes Gebiet des Substrats bestrahlt, das auf die dritte Position zentriert ist, wobei die erst und zweite Richtung unterschiedlich sind.

4. Verfahren (200) nach einem der Ansprüche 1-3, welches Bestrahlen zwei beliebiger nächster benachbarter Gebiete des Substrats unter Verwendung von Laserpulsen umfasst, die durch eine Zeitperiode separiert sind, die größer als oder gleich einer vorbestimmten minimalen Zeitperiode ist, wobei die vorbestimmte minimale Zeitperiode so gewählt wird, dass die Temperaturen der zwei beliebigen nächsten benachbarten Gebiete des Substrats kleiner als oder gleich einer vorbestimmten Schwellentemperatur sind.

5. Verfahren (200) nach einem der Ansprüche 1-4, welches Bestrahlen zwei beliebiger Gebiete des Substrats mit aufeinanderfolgenden Laserpulsen umfasst, wobei die zwei beliebigen Gebiete des Substrats durch eine Entfernung separiert sind, die größer als oder gleich einer vorbestimmten minimalen räumlichen Separation ist, wobei die vorbestimmte minimale räumliche Separation so gewählt wird, dass die Temperaturen der zwei beliebigen Gebiete des Substrats kleiner als oder gleich einer vorbestimmten Schwellentemperatur sind.

6. Verfahren (200) nach einem der Ansprüche 1-5, wobei die erste Geschwindigkeitskomponente unidirektional ist und die zweite Geschwindigkeitskomponente hinsichtlich des Betrags und/oder der Richtung variiert.

7. Verfahren (200) nach einem der Ansprüche 1-5, wobei die erste Geschwindigkeitskomponente mit einer Bewegung des Substrats relativ zu dem gepulsten Laserstrahl assoziiert ist.

8. Verfahren (200) nach einem der Ansprüche 1-7, das ferner Folgendes umfasst:
Bestimmen oder Messen von Emissionstimingdaten für einen oder mehrere der Laserpulse;
Bestimmen oder Messen einer nominalen Schreibposition des gepulsten Laserstrahls in dem Substrat und/oder Bestimmen oder Messen einer Geschwindigkeit der nominalen Schreibposition des gepulsten Laserstrahls über das Substrat hinweg;
Berechnen einer vorhergesagten nominalen Schreibposition des gepulsten Laserstrahls in dem Substrat zu einer Zeit einer Emission eines zukünftigen Laserpulses auf das Substrat unter Verwendung der bestimmten oder gemessenen Emissionstimingdaten und wenigstens einer der bestimmten oder gemessenen nominalen Schreibposition des gepulsten Laserstrahls in dem Substrat und der bestimmten oder gemessenen Geschwindigkeit der nominalen Schreibposition des gepulsten Laserstrahls über das Substrat hinweg; und
Kompensieren jeglicher Differenz zwischen der vorhergesagten nominalen Schreibposition des gepulsten Laserstrahls in dem Substrat und einer entsprechenden gewünschten zukünftigen nominalen Schreibposition des gepulsten Laserstrahls in dem Substrat durch Steuern einer Strahllenkkonfiguration eines Strahlscanners und/oder einer Änderungsrate der Strahllenkkonfiguration des Strahlscanners, um jegliche Differenz zwischen der vorhergesagten nominalen Schreibposition des gepulsten Laserstrahls in dem Substrat und der gewünschten zukünftigen nominalen Schreibposition des gepulsten Laserstrahls in dem Substrat zu kompensieren.

9. Verfahren (200) nach einem der Ansprüche 1-8, das ferner Folgendes umfasst:
Bestimmen oder Messen von Emissionstimingdaten für einen oder mehrere der Laserpulse;
Bestimmen oder Messen einer Strahllenkkonfiguration, wie etwa eines oder mehrerer Neigungswinkel eines langsameren Strahlscanners, und/oder Bestimmen oder Messen einer Änderungsrate einer Strahllenkkonfiguration, wie etwa einer Änderungsrate des einen oder der mehreren Neigungswinkel des langsameren Strahlscanners;
Berechnen einer vorhergesagten Strahllenkkonfiguration des langsameren Strahlscanners zu einer Zeit einer Emission eines zukünftigen Laserpulses unter Verwendung der bestimmten oder gemessenen Emissionstimingdaten und wenigstens einer der bestimmten oder gemessenen Strahllenkkonfiguration des langsameren Strahlscanners und der bestimmten oder gemessenen Änderungsraten der Strahllenkkonfiguration des langsameren Strahlscanners; und
Verwenden eines schnelleren Strahlscanners zum Kompensieren jeglicher Differenz zwischen der vorhergesagten Strahllenkkonfiguration des langsameren Strahlscanners und einer entsprechenden gewünschten Strahllenkkonfiguration des langsameren Strahlscanners zu der Zeit einer Emission des zukünftigen Laserpulses, zum Beispiel durch Steuern einer Strahllenkkonfiguration des schnelleren Strahlscanners und/oder einer Änderungsrate der Strahllenkkonfiguration des schnelleren Strahlscanners, um jegliche Differenz zwischen der vorhergesagten Strahllenkkonfiguration des langsameren Strahlscanners und einer entsprechenden gewünschten Strahllenkkonfiguration des langsameren Strahlscanners zu der Zeit einer Emission des zukünftigen Laserpulses zu kompensieren.

10. Verfahren (200) nach einem der Ansprüche 1-9, wobei die wenigstens drei Gebiete des Substrats in einem Array aufgereiht sind, wie etwa einem 1D-Array, einem 2D-Array oder einem 3D-Array, zum Beispiel einem einheitlichen 1D-Array, einem einheitlichen 2D-Array oder einem einheitlichen 3D-Array.

11. System (100) zum Modifizieren eines Substrats, wobei das System Folgendes umfasst:
einen gepulsten Laser (102), der zum Erzeugen eines gepulsten Laserstrahls konfiguriert ist;
wobei das System **gekennzeichnet ist durch**:
einen Strahlteiler (111), der zum Empfangen des gepulsten Laserstrahls konfiguriert ist;
eine Bestrahlungssteueranordnung 103, die Folgendes aufweist: eine Anordnung (104) optischer Elemente, die zum Empfangen eines ersten Teils des gepulsten Laserstrahls von dem Strahlteiler (111) konfiguriert sind, wobei die optischen Elemente Folgendes umfassen:
ein erstes zweiachsiges Strahlscannerelement (120);
ein zweites zweiachsiges Strahlscannerelement (122) nach dem ersten zweiachsigen Strahlscannerelement (120); und
ein Mikroskopobjektiv (148) nach dem zweiten zweiachsigen Strahlscannerelement (122);
einen Objekttisch (109), der zum Aufnehmen eines Substrats (108) konfiguriert ist, wobei der Objekttisch (109) derart positioniert wird, dass das Substrat (108), das mit dem Objekttisch (109) gekoppelt ist, den gepulsten Laserstrahl von der Anordnung (104) optischer Elemente empfängt;
einen Fotodetektor (110), der zum Empfangen eines zweiten Teils des gepulsten Laserstrahls konfiguriert ist; und
eine Steuerschaltungsanordnung (114), die dazu konfiguriert ist, Folgendes zu steuern:
das erste zweiachsige Strahlscannerelement (120) und das zweite zweiachsige Strahlscannerelement (122) basierend auf Signalen von dem Fotodetektor (110),
die Richtung des gepulsten Laserstrahls und/oder die Position des Substrats (108) von Laserpuls zu Laserpuls, mit Steuern der Bewegung des gepulsten Laserstrahls und/oder des Substrats, so dass eine nominale Schreibposition des gepulsten Laserstrahls über das Substrat (108) hinweg mit einer Geschwindigkeit bewegt wird, die während einer Zeitperiode variiert, über die die wenigstens drei aufeinanderfolgenden Laserpulse die wenigstens drei Gebiete des Substrats (108) bestrahlen, wobei die Geschwindigkeit eine erste und zweite Geschwindigkeitskomponente aufweist, und
wobei die erste Geschwindigkeitskomponente konstant ist und die zweite Geschwindigkeitskomponente variabel ist, oder wobei die erste Geschwindigkeitskomponente langsamer als die zweite Geschwindigkeitskomponente variiert.

12. System (100) nach Anspruch 11, wobei die Steuerschaltungsanordnung (114) zum Steuern einer Richtung des gepulsten Laserstrahls von Laserpuls zu Laserpuls konfiguriert ist, so dass wenigstens drei aufeinanderfolgende Laserpulse sequentiell wenigstens drei Gebiete des Substrats (108) gemäß einer vorbestimmten räumlichen Sequenz bestrahlen, die relative räumliche Positionen und eine Reihenfolge einer Bestrahlung der wenigstens drei Gebiete des Substrats (108) definiert.

13. System (100) nach Anspruch 11 oder 12, wobei die Steuerschaltungsanordnung (114) ferner zum Steuern einer Position des Objekttischs (109) von Laserpuls zu Laserpuls konfiguriert ist, so dass wenigstens drei aufeinanderfolgende Laserpulse sequentiell wenigstens drei Gebiete des Substrats (108) gemäß einer vorbestimmten räumlichen Sequenz bestrahlen, die relative räumliche Positionen und eine Reihenfolge einer Bestrahlung der wenigstens drei Gebiete des Substrats (108) definiert.

## Revendications

1. Procédé (200) de modification d'un substrat, le procédé comprenant :
la génération (202) d'un faisceau laser pulsé comprenant un train d'impulsions laser, le train d'impulsions laser comprenant au moins trois impulsions laser consécutives ; et
la commande (204) d'une direction du faisceau laser pulsé et/ou d'une position d'un substrat d'une impulsion laser à une autre pour irradier séquentiellement au moins trois régions d'un substrat avec les au moins trois impulsions laser consécutives afin de modifier le substrat selon un profil spatial souhaité, la commande consistant à irradier séquentiellement les au moins trois régions du substrat selon une séquence spatiale prédéterminée qui définit des positions spatiales relatives d'au moins trois régions du substrat et définit un ordre d'irradiation des au moins trois régions du substrat,
le procédé étant **caractérisé par** :
la commande de la direction du faisceau laser pulsé et/ou de la position du substrat d'une impulsion laser à une autre consistant à commander le mouvement du faisceau laser pulsé et/ou du substrat de manière à déplacer une position d'écriture nominale du faisceau laser pulsé sur le substrat avec une vitesse variant pendant une période de temps au cours de laquelle les au moins trois impulsions laser consécutives irradient les au moins trois régions du substrat, la vitesse comportant une première et une seconde composantes de vitesse, la première composante de vitesse étant constante et la seconde composante de vitesse étant variable, ou la première composante de vitesse variant plus lentement que la seconde composante de vitesse.

2. Procédé (200) selon la revendication 1, la commande (204) de la direction du faisceau laser pulsé et/ou de la position du substrat comprenant la synchronisation d'un mouvement du faisceau laser pulsé et/ou du substrat avec la temporisation des au moins trois impulsions laser consécutives de sorte que les au moins trois régions du substrat soient irradiées séquentiellement avec les au moins trois impulsions laser consécutives conformément à la séquence spatiale prédéterminée.

3. Procédé (200) selon l'une des revendications 1 ou 2, la commande (204) de la direction du faisceau laser pulsé ou de la position du substrat comprenant :
la commande du mouvement du faisceau laser pulsé ou du substrat de manière à déplacer une position d'écriture nominale du faisceau laser pulsé vers une première position dans le substrat de sorte qu'une première des au moins trois impulsions laser consécutives irradie une première région du substrat centrée sur la première position ;
la commande du mouvement du faisceau laser pulsé ou du substrat de manière à déplacer la position d'écriture nominale du faisceau laser pulsé sur le substrat selon une première direction depuis la première position dans le substrat vers une deuxième position dans le substrat de sorte qu'une deuxième des au moins trois impulsions laser consécutives irradie une deuxième région du substrat centrée sur la deuxième position ; et
la commande du mouvement du faisceau laser pulsé ou du substrat de manière à déplacer la position d'écriture nominale du faisceau laser pulsé sur le substrat selon une deuxième direction depuis la deuxième position dans le substrat vers une troisième position dans le substrat de sorte qu'une troisième des au moins trois impulsions laser consécutives irradie une troisième région du substrat centrée sur la troisième position, la première et la deuxième directions étant différentes.

4. Procédé (200) selon l'une quelconque des revendications 1 à 3, comprenant l'irradiation de deux régions voisines quelconques du substrat au moyen d'impulsions laser qui sont séparées par une période de temps supérieure ou égale à une période minimale prédéterminée, la période minimale prédéterminée étant choisie de sorte que les températures desdites deux régions voisines du substrat soient inférieures ou égales à une température seuil prédéterminée.

5. Procédé (200) selon l'une quelconque des revendications 1 à 4, comprenant l'irradiation de deux régions quelconques du substrat avec des impulsions laser consécutives, lesdites deux régions quelconques du substrat étant séparées par une distance supérieure ou égale à une séparation spatiale minimale prédéterminée, la séparation spatiale minimale prédéterminée étant choisie de sorte que les températures desdites deux régions quelconques du substrat soient inférieures ou égales à une température seuil prédéterminée.

6. Procédé (200) selon l'une quelconque des revendications 1 à 5, la première composante de vitesse étant unidirectionnelle et la deuxième composante de vitesse variant en amplitude et/ou en direction.

7. Procédé (200) selon l'une quelconque des revendications 1 à 5, la première composante de vitesse étant associée au mouvement du substrat par rapport au faisceau laser pulsé.

8. Procédé (200) selon l'une quelconque des revendications 1 à 7, comprenant :
la détermination ou la mesure de données de temporisation d'émission pour une ou plusieurs des impulsions laser ;
la détermination ou la mesure d'une position d'écriture nominale du faisceau laser pulsé dans le substrat et/ou la détermination ou la mesure d'une vitesse de la position d'écriture nominale du faisceau laser pulsé sur le substrat ;
le calcul d'une position d'écriture nominale prédite du faisceau laser pulsé dans le substrat à un instant d'émission d'une impulsion laser future sur le substrat en utilisant les données de temporisation d'émission déterminées ou mesurées et au moins l'une de la position d'écriture nominale déterminée ou mesurée du faisceau laser pulsé dans le substrat et de la vitesse déterminée ou mesurée de la position d'écriture nominale du faisceau laser pulsé sur le substrat ; et
la compensation de toute différence entre la position d'écriture nominale prédite du faisceau laser pulsé dans le substrat et une position d'écriture nominale future souhaitée correspondante du faisceau laser pulsé dans le substrat en commandant une configuration de guidage de faisceau d'un dispositif de balayage de faisceau et/ou un taux de variation de la configuration de guidage de faisceau du dispositif de balayage de faisceau, afin de compenser toute différence entre la position d'écriture nominale prédite du faisceau laser pulsé dans le substrat et la position d'écriture nominale future souhaitée du faisceau laser pulsé dans le substrat.

9. Procédé (200) selon l'une quelconque des revendications 1 à 8, comprenant :
la détermination ou la mesure de données de temporisation d'émission pour une ou plusieurs des impulsions laser ;
la détermination ou la mesure d'une configuration de guidage de faisceau telle qu'un ou plusieurs angles d'inclinaison d'un dispositif de balayage de faisceau plus lent et/ou la détermination ou la mesure d'un taux de variation d'une configuration de guidage de faisceau telle qu'un taux de variation du ou des angles d'inclinaison du dispositif de balayage de faisceau plus lent ;
le calcul d'une configuration de guidage de faisceau prédite du dispositif de balayage de faisceau plus lent à un instant d'émission d'une impulsion laser future en utilisant les données de temporisation d'émission déterminées ou mesurées et au moins l'une parmi la configuration de guidage de faisceau déterminée ou mesurée du dispositif de balayage de faisceau plus lent et le taux de variation déterminé ou mesuré de la configuration de guidage de faisceau du dispositif de balayage de faisceau plus lent ; et
l'utilisation d'un dispositif de balayage de faisceau plus rapide pour compenser toute différence entre la configuration de guidage de faisceau prédite du dispositif de balayage de faisceau plus lent et une configuration de guidage de faisceau souhaitée correspondante du dispositif de balayage de faisceau plus lent à l'instant d'émission de l'impulsion laser future, par exemple en commandant une configuration de guidage de faisceau du dispositif de balayage de faisceau plus rapide et/ou un taux de variation de la configuration de guidage de faisceau du dispositif de balayage de faisceau plus rapide afin de compenser toute différence entre la configuration de guidage de faisceau prédite du dispositif de balayage de faisceau plus lent et une configuration de guidage de faisceau souhaitée correspondante du dispositif de balayage de faisceau plus lent à l'instant d'émission de l'impulsion laser future.

10. Procédé (200) selon l'une quelconque des revendications 1 à 9, les au moins trois régions du substrat étant agencées dans un réseau tel qu'un réseau 1D, un réseau 2D ou un réseau 3D, par exemple un réseau 1D uniforme, un réseau 2D uniforme ou un réseau 3D uniforme.

11. Système (100) pour modifier un substrat, le système comprenant :
un laser pulsé (102) configuré pour générer un faisceau laser pulsé ;
le système étant **caractérisé par** :
un séparateur de faisceau (111) configuré pour recevoir le faisceau laser pulsé ;
un agencement de commande d'irradiation (103) comprenant : un agencement (104) d'éléments optiques configuré pour recevoir une première partie du faisceau laser pulsé provenant du séparateur de faisceau (111), les éléments optiques comprenant :
un premier élément de dispositif de balayage de faisceau à deux axes (120) ;
un second élément de dispositif de balayage de faisceau à deux axes (122) disposé après le premier élément de dispositif de balayage de faisceau à deux axes (120) ;
un objectif de microscope (148) disposé après le second élément de dispositif de balayage de faisceau à deux axes (122) ;
une platine (109) configurée pour porter un substrat (108), la platine (109) étant positionnée de telle sorte que le substrat (108) couplé à la platine (109) reçoit le faisceau laser pulsé provenant de l'agencement (104) d'éléments optiques ;
un photodétecteur (110) configuré pour recevoir une deuxième partie du faisceau laser pulsé ; et
une circuiterie de commande (114) configurée pour commander :
le premier élément de dispositif de balayage de faisceau à deux axes (120) et le second élément de dispositif de balayage de faisceau à deux axes (122) sur la base de signaux provenant du photodétecteur (110) ;
la direction du faisceau laser pulsé et/ou la position du substrat (108) d'une impulsion laser à une autre, en commandant le mouvement du faisceau laser pulsé et/ou du substrat de manière à déplacer une position d'écriture nominale du faisceau laser pulsé sur le substrat (108) avec une vitesse qui varie pendant une période de temps au cours de laquelle les au moins trois impulsions laser consécutives irradient les au moins trois régions du substrat (108), la vitesse comportant une première et une seconde composantes de vitesse, et
la première composante de vitesse étant constante et la seconde composante de vitesse étant variable, ou la première composante de vitesse variant plus lentement que la seconde composante de vitesse.

12. Système (100) selon la revendication 11, la circuiterie de commande (114) étant configurée pour commander une direction du faisceau laser pulsé d'une impulsion laser à une autre de sorte qu'au moins trois impulsions laser consécutives irradient séquentiellement au moins trois régions du substrat (108) selon une séquence spatiale prédéterminée qui définit des positions spatiales relatives, et un ordre d'irradiation, des au moins trois régions du substrat (108).

13. Système (100) selon la revendication 11 ou 12, la circuiterie de commande (114) étant en outre configurée pour commander une position de la platine (109) d'une impulsion laser à une autre de sorte qu'au moins trois impulsions laser consécutives irradient séquentiellement au moins trois régions du substrat (108) selon une séquence spatiale prédéterminée qui définit des positions spatiales relatives et un ordre d'irradiation des au moins trois régions du substrat (108).
